# EUROPEAN PATENT APPLICATION

(11) **EP 1 424 111 A2**
(43) Date of publication of application: **02.06.2004**
(21) Application number: 03026942.7
(22) Date of filing: 25.11.2003
(51) Int. Cl.: A63F 13/10

(54) **Method of battle in a video game, based on image and voice input captured by an information terminal**

(30) Priority: 27.11.2002 JP 2002343847
(71) Applicant: NEC Interchannel, Ltd., Minato-ku, Tokyo (JP)
(72) Inventor: Monden, Hiroshi, Minato-ku Tokyo (JP)
(74) Representative: Betten & Resch

(57) **Abstract**

A method of battle in a video game is prepared with a larger number of variations of fighting characters presented so that an element of fun in a battle can be extended. In the method of battle in a video game using an information terminal, an image captured by a camera is set as a fighting character, and the set fighting character is made to battle with another fighting character on a screen. A capability value is set for each of the fighting characters according to the attribute information, etc. about an image captured by a camera, and a winner is determined depending on each capability value of a fighting character.

## Description

### BACKGROUND OF THE INVENTION

### 1. Field of the Invention

The present invention relates to a method of battle in a video game, and an information terminal and a program for use in the method.

### 2. Description of the Prior Art

Various types of video battle games have been realized using an information terminal such as a hand-held game machine, etc. A typical example is a video battle game in which a winner is determined depending on a value obtained by digitizing a bar code when each of the opponents inputs an arbitrary bar code to an information terminal.

However, since a winner is determined depending on the value of a bar code in the above-mentioned video battle game, there is a very small element of fun in the game where the winner is determined at the point of bar codes selected or where the battle is performed between dry bar codes.

Therefore, video battle games in which an operator can newly generate a fighting character using parts recorded in advance in an information terminal, or can generate a fighting character by improving a basic character using parts recorded in advance in an information terminal so that a winner can be determined depending on the capability value of the generated fighting character are realized (for example, Japanese Patent Application Laid-open No. 198076/1994, Japanese Patent Application Laid-open No. 329267/1996, Japanese Patent Application Laid-open No. 216267/1999, and Japanese Patent Application Laid-open No. 35426/2002).

However, since a fighting character is generated using parts recorded in advance in an information terminal in the above-mentioned video battle game, a fighting character can be generated using the parts only, there is the problem that variations of fighting characters can be restricted. Furthermore, since a fighting character is generated by selecting parts by an operator, there is also the problem that a resultant game has no elements of interest, since no element of happening is in a battle result.

### SUMMARY OF THE INVENTION

The present invention aims at providing a method of battle in a video game, and an information terminal and a program for use in the method capable of generating variations of fighting characters and increasing the element of fun in a battle by adding an element of happening to a battle result.

To attain the above-mentioned aim, an image captured by a camera is set as a fighting character, and the set fighting character is made to battle with another fighting character on the screen in the method of battle in a video game according to the present invention.

Thus, since an image captured by a camera is set as a fighting character, a large number of variations of fighting characters can be presented. Furthermore, since the fighting characters set by images captured by a camera, not dry fighting characters such as bar codes, battle with each other, the operator can enjoy a realistic video battle game.

Furthermore, in the method of battle in a video game according to the present invention, the capability value of a fighting character can be set so that a winner is determined depending on the capability value of each fighting character in a battle between fighting characters. When the capability value of a fighting character is set, the capability value can be set according to the attribute information about an image captured by a camera. As the attribute information about an image, for example, the capacity value of an image, the RGB data obtained by RGB-analyzing an image, and vector data obtained by vector-analyzing an image can be used.

Thus, since the capability value of a fighting character is set according to the attribute information about an image (image capacity, etc.), the same subject does not always indicate the same capability value depending on the angle and the background when the subject is captured. Therefore, the capability value of a fighting character can incidentally change, and a battle result is not fixed.

Furthermore, in the method of battle in a video game according to the present invention, fighting characters can battle with each other on an information terminal of an operator, or a fighting character on an information terminal of an operator can battle with a fighting character on another information terminal. When a fighting character on an information terminal of an operator battles with a fighting character on another information terminal, fighting character information is communicated between the information terminals using means such as infrared communications, wireless communications, or a mobile storage medium.

The above and other objects, features, and advantages of the present invention will become apparent from the following description with reference to the accompanying drawings which illustrate examples of the present invention.

### BRIEF DESCRIPTION OF THE DRAWINGS

FIG. 1 shows the configuration of a system of battle in a video game for use in a method of battle in a video game according to an embodiment of the present invention;
FIG. 2 shows an example of the configuration of the mobile terminal shown in FIG. 1;
FIG. 3 is a flowchart of an example of the method of battle in a video game in the system of battle in a video game shown in FIGS. 1 and 2;
FIG. 4A shows an example of the screen displayed when the name of a fighting character is selected on a mobile terminal shown in FIGS. 1 and 2;
FIG. 4B shows an example of the screen displayed when the words of attack of a fighting character are selected on a mobile terminal shown in FIGS. 1 and 2;
FIG. 4C shows an example of the screen displayed when the words of defense of a fighting character are selected on a mobile terminal shown in FIGS. 1 and 2;
FIG. 4D shows an example of the screen displayed when the words of victory of a fighting character are selected on a mobile terminal shown in FIGS. 1 and 2;
FIG. 4E shows an example of the screen displayed when the words of loss of a fighting character are selected on a mobile terminal shown in FIGS. 1 and 2;
FIG. 5A shows an example of the screen displayed during battle in a video game on a mobile terminal shown in FIGS. 1 and 2; and
FIG. 5B shows an example of the screen displayed upon completion of battle in a video game on a mobile terminal shown in FIGS. 1 and 2.

### DETAILED DESCRIPTION OF THE PREFERRED EMBODIMENTS

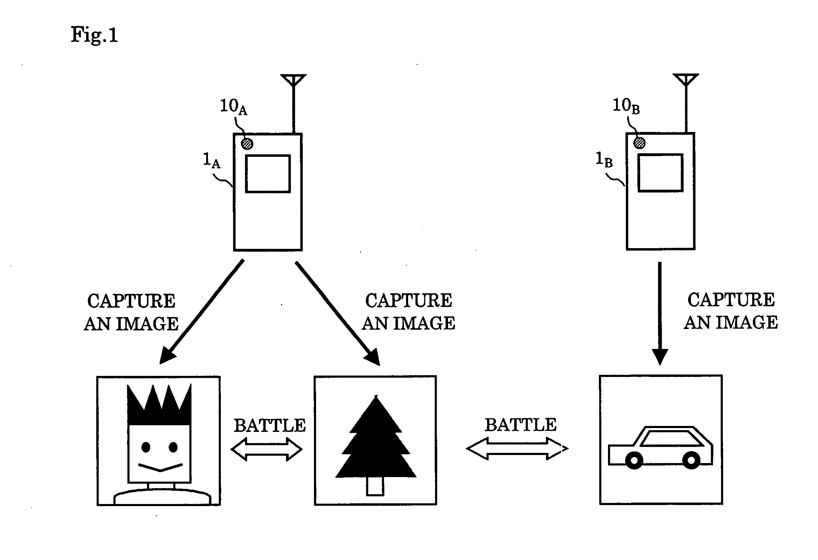

FIG. 1 shows the configuration of a system of battle in a video game for use in a method of battle in a video game according to an embodiment of the present invention. The information terminal according to the present invention can be any information terminal which has the function of a camera, or which can operate with an information terminal having the function of a camera. For example, as an information terminal, a mobile phone, a PDA (personal digital assistant), a mobile terminal such as a hand-held game machine, a notebook personal computer can be applied. In the description below, an example in which a mobile terminal having the function of a mobile phone is used as an information terminal is explained.

As shown in FIG. 1, a system of battle in a video game according to an embodiment of the present invention has mobile terminals 1_{A} and 1_{B} respectively provided with cameras 10_{A} and 10_{B}. In the present embodiment, each of the mobile terminals 1_{A} and 1_{B} sets images captured by the cameras 10_{A} and 10_{B} as fighting characters, and make them battle with other fighting characters. An image set as a fighting character is not limited to a still image, but can be a moving picture. Furthermore, a subject of an image is not limited to a person, but can be any substance.

For example, the mobile terminal 1_{A} makes a fighting character of the mobile terminal 1_{A} battle with another fighting character on the same mobile terminal 1_{A} or with another fighting character on another mobile terminal 1_{B}.

When the fighting characters on the mobile terminals 1_{A} and 1_{B} are made to battle with each other, the information about the fighting characters are communicated between the mobile terminals 1_{A} and 1_{B} in the following method. For example, a method of communicating information about fighting characters in the infrared communications between the mobile terminals 1_{A} and 1_{B}, a method of communicating information about fighting characters in the wireless communications through a base station not shown in the attached drawings between the mobile terminals 1_{A} and 1_{B}, a method of communicating information about fighting characters between the mobile terminals 1_{A} and 1_{B} using a mobile recording medium are used.

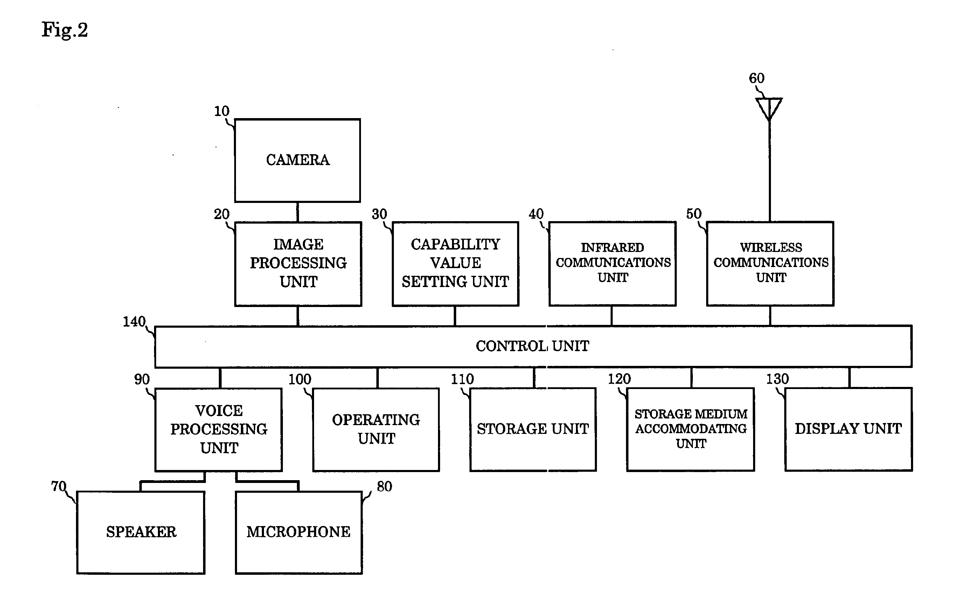

As shown in FIG. 2, the mobile terminals 1_{A} and 1_{B} comprise a camera 10, an image processing unit 20, a capability value setting unit 30, an infrared communications unit 40, a wireless communications unit 50, an antenna 60, a speaker 70, a microphone 80, a voice processing unit 90, an operating unit 100, a storage unit 110, a storage medium accommodating unit 120, a display unit 130, and a control unit 140.

The camera 10 captures various images. The image processing unit 20 fetches an image captured by the camera 10, and converts the image into data format (GIF format, JPEG format, PNG format, etc.) which can be processed on the mobile terminal.

The capability value setting unit 30 sets the capability value of the fighting character whose image is captured by the camera 10. The control unit 140 determines a winner in the video battle game depending on the capability value.

The capability value setting unit 30 can be set by dividing the capability value of a fighting character into a plurality of items (for example, life, power, speed).

The capability value setting unit 30 can also set the capability value of a fighting character according to the attribute information about an image. For example, the capability value setting unit 30 can set the capability value of a fighting character based on a value of an arbitrary digit of an image capacity using the image capacity as the attribute information about an image.

When the capability value of a fighting character is set by dividing it into a plurality of items, the capability value setting unit 30 can set a capability value based on the values of different digits of the image capacity for each item. However, to make the capability value of a fighting character depend on the size of an image capacity to some extent, and to prevent the capability value from largely fluctuating by a small capacity difference, it is desired that the capability value is set based on a value'of a higher digit.

The capability value setting unit 30 first determines the set range of a capability value based on the value of an arbitrary digit of an image capacity, and can select the capability value at random from the set range. In this case, the same fighting character of the same image can have a random value as a capability value of a fighting character.

The image capacity largely fluctuates depending on the data format of an image. Therefore, when there are a plurality of data formats which can be processed in the mobile terminal, it is desired that the capability value setting unit 30 determines in advance one data format from among the plurality of data formats, and sets the capability value based on the image capacity when the determined data format is entered.

The capability value setting unit 30 can also set the capability value of a fighting character using the RGB data obtained by RGB-analyzing an image, the vector data obtained by vector-analyzing an image, etc. in addition to the above-mentioned image capacity as the attribute information about an image.

The microphone 80 collects transmitted voice of a user when the mobile terminal is used as a mobile phone. The voice processing unit 90 converts the collected transmitted voice by the microphone 80 into a radio frequency signal and outputs the conversion result to the wireless communications unit 50. Furthermore, the voice processing unit 90 demodulates the voice signal received from a communication partner using the wireless communications unit 50 when the mobile terminal is used as a mobile phone, and outputs the demodulated signal to the speaker 70. The speaker 70 outputs the received voice from the communication partner according to the received voice signal from the voice processing unit 90.

The operating unit 100 includes a plurality of keys. The operating unit 100 receives various operation contents by the operations using the keys. The operation contents input to the operating unit 100 can be, for example, the name of a fighting character captured by the camera 10, the words of a fighting character during battle in a video game.

The storage unit 110 is a built-in ROM (read only memory), RAM (random access memory), etc. in the mobile terminal. The storage unit 110 holds a program for the control unit 140, and an application software for executing a video battle game. Furthermore, the storage unit 110 stores an image of a fighting character captured by the camera 10, the capability value of the fighting character set by the capability value setting unit 30, the name, the words, etc. of a fighting character set by the operating unit 100.

The storage medium accommodating unit 120 stores mobile recording medium such as an SD (secure digital) card, a memory stick. The storage medium accommodating unit 120 reads data from an accommodated recording medium, and writes data to the recording medium. For example, if a recording medium to be transferred to another mobile terminal is accommodated in the storage medium accommodating unit 120 in a battle between a fighting character of a mobile terminal and a fighting character of another mobile terminal, the information such as an image of a fighting character captured by the camera 10, the name and words. of a fighting character set by the operating unit 100, and the information about a capability value of the fighting character set by the capability value setting unit 30 are written. Additionally, when a recording medium to which similar information about the fighting character of another mobile terminal is written is accommodated in the storage medium accommodating unit 120, the information about a fighting character of another mobile terminal is read from the recording medium.

The display unit 130 is a screen displaying various images. For example, an image of a fighting character captured by the camera 10, the capability value of the fighting character set by the capability value setting unit 30, the name, the words. of the fighting character set by the operating unit 100 are displayed on the screen of the display unit 130 in the video battle game.

The infrared communications unit 40 performs infrared communications. For example, in the battle between a fighting character of a mobile terminal and a fighting character of another mobile terminal, the infrared communications unit 40 transmits the information about an image of a fighting character captured by the camera, the name and words, etc. of a fighting character set by the operating unit 100, and the information about the capability value of a fighting character set by the capability value setting unit 30 to another mobile terminal. Furthermore, the infrared communications unit 40 receives similar information about a fighting character of another mobile terminal from another mobile terminal.

The wireless communications unit 50 performs wireless communications through the antenna 60. For example, in the battle between a fighting character of a mobile terminal and a fighting character of another mobile terminal, the wireless communications unit 50 transmits the information about an image of a fighting character captured by the camera, the name and words, etc. of a fighting character set by the operating unit 100, and the information about the capability value of a fighting character set by the capability value setting unit 30 to another mobile terminal. Furthermore, the wireless communications unit 50 receives similar information about a fighting character of another mobile terminal from another mobile terminal. Additionally, the wireless communications unit 50 can perform wireless communications of a communication voice signal and electronic mail when the mobile terminal is used as a mobile phone.

The control unit 140 controls each component based on the contents of a program held in the storage unit 110. For example, the control unit 140 makes fighting characters battle with each other according to the information about an image, a capability value, a name, words, etc. of a fighting character. At this time, the control unit 140 determining a winner based on each capacity value of a fighting character. The control unit 140 uses the information recorded in the storage unit 110 as the information about a fighting character of the mobile terminal. The control unit 140 uses the information obtained from another mobile terminal through a recording medium accommodated by the infrared communications unit 40, the wireless communications unit 50, or the storage medium accommodating unit 120 as the information about the fighting character of another mobile terminal.

That is, the control unit 140 does not set the capability value of a fighting character of another mobile terminal using a mobile terminal based on the image obtained by another mobile terminal, but uses the capability value obtained from another mobile terminal through the recording medium accommodated by the infrared communications unit 40, the wireless communications unit 50, or the storage medium accommodating unit 120.

Therefore, although the image of the fighting character of a mobile terminal is converted into another data format by a mobile terminal of the opponent because the different data formats of images processed in the mobile terminal and the other mobile terminal of the opponent are used, the capability value of the fighting character can be constant regardless of the conversion of a data format.

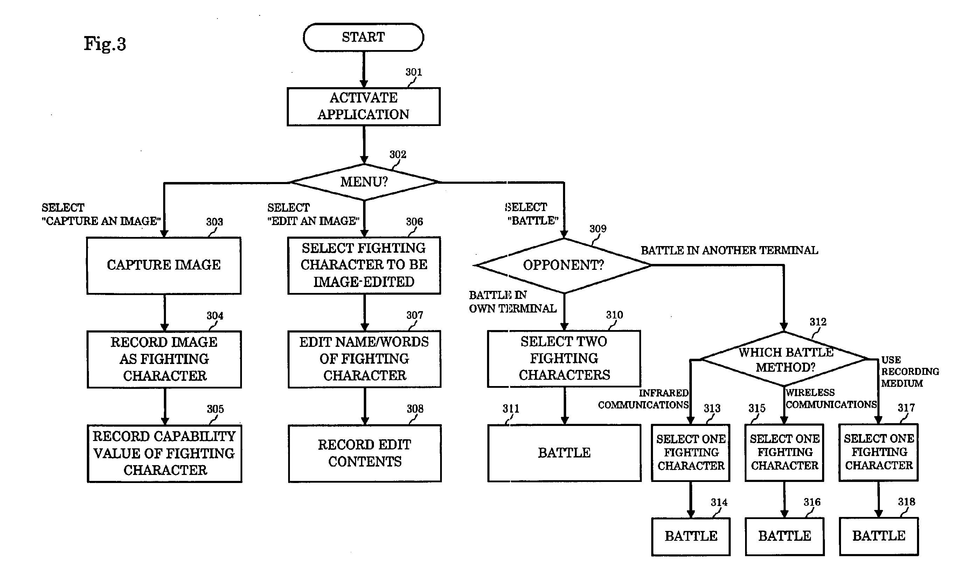

An example of the method of battle in a video game according to the present embodiment is described below by referring to the flowchart shown in FIG. 3 specifically about the operation of the mobile terminal 1_{A}. In this example, the rule of the video battle game is that fighting characters attack each other and when one of them indicates the life of 0, he or she loses the battle, thereby completing the game.

In FIG. 3, first in step 301, the operator of the mobile terminal 1_{A} activates the application software of the video battle game recorded in the storage unit 110. Then, in step 302, the operator of the mobile terminal 1_{A} selects any menu for a video battle game on the screen of the display unit 130. In this example, it is assumed that "capture an image" for capturing an image, "edit an image" for edition of a captured image, and "battle" for making the fighting characters battle each other can be selected.

If "capture an image" is selected in step 302, then in step 303, the operator of the mobile terminal 1_{A} captures an image using the camera 10, and issues a request to record the captured image as a fighting character on the screen of the display unit 130. Then, in step 304, the image captured in step 303 is recorded in the storage unit 110 as a fighting character under the control of the control unit 140. Furthermore, in step 305, the capability value setting unit 30 sets the capability value of the fighting character. The set capability value is recorded in the storage unit 110 under the control of the control unit 140.

If "edit an image" is selected in step 302, then the operator of the mobile terminal 1_{A} selects the fighting character to be image-edited on the screen of the display unit 130 in step 306. Then, in step 307, the operator of the mobile terminal 1_{A} specifies editing the name of the selected fighting character, the words in the video battle game, etc., and specifying recording the edit contents. Then, in step 308, the edit contents edited in step 307 is recorded in the storage unit 110 under the control of the control unit 140.

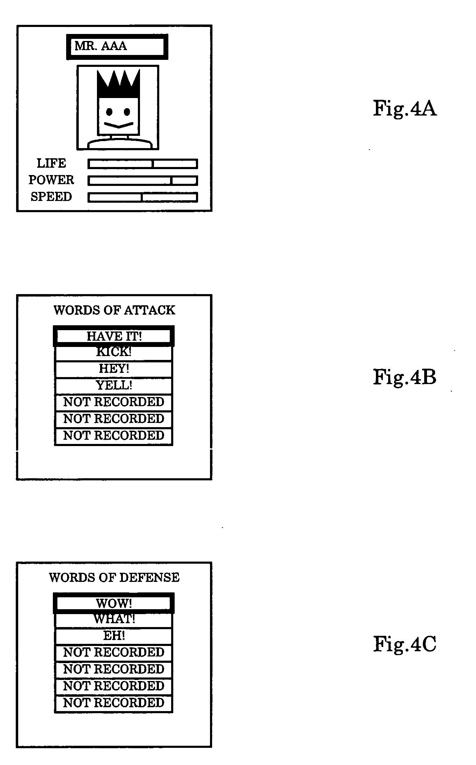

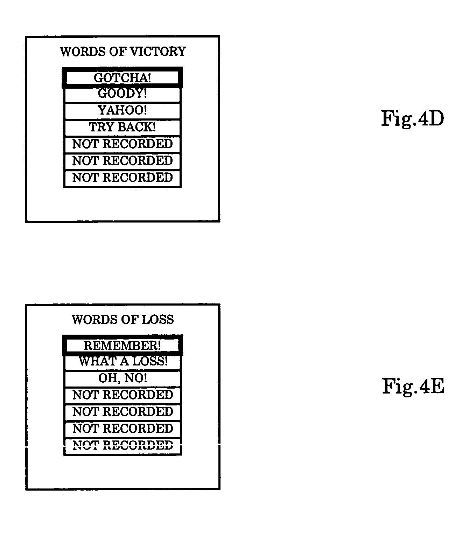

In this example, as shown in FIG. 4A, it is assumed that "Mr. AAA" is input as the "name" of a fighting character and recorded.

Furthermore, according to the present embodiment, as shown in FIGS. 4B to 4E, "Have it!" is selected and recorded as the "words of attack" of the fighting character, "Wow!" is selected and recorded as the "words of defense", "Yahoo!" is selected and recorded as the "words of victory", and "Remember!" is selected and recorded as the "words of loss". The words of a fighting character are recorded not only by recording after selecting any of the options of the already input words, but also by inputting new words.

In the present embodiment, as shown in FIG. 4A, the capability value of the fighting character is set in each of the items "life", "power", and "speed". The "life" decreases by each attack from a fighting character, and the game is lost when the "life" indicates 0. The "power" has a larger damage to an opposite character during attack. Relating to the "speed", the higher the value is, the shorter time is required to give the next attack.

By referring to FIG. 3, when "battle" is selected in step 302, then, in step 309, the operator of the mobile terminal 1_{A} either makes the fighting characters of the mobile terminal 1_{A} battle with each other on the screen of the display unit 130, or makes the fighting character of the mobile terminal 1_{A} battle with the fighting character of another mobile terminal (mobile terminal 1_{B} in this example).

When the operator selects the battle between the fighting characters of the mobile terminal 1_{A} in step 309, then in step 310, the operator of the mobile terminal 1_{A} selects two fighting characters on the screen of the display unit 130, and specifies the battle of the fighting characters with each other. Then, each piece of the information (an image, a capability value, name, words in video battle game, etc.) about the two fighting characters selected in step 310 is read from the storage unit 110 under the control of the control unit 140. Then, in step 311, the control unit 140 makes the fighting characters battle with each other on the screen of the display unit 130 according to the information about the fighting characters read from the storage unit 110. The control unit 140 determines a winner based on each capability value of a fighting character.

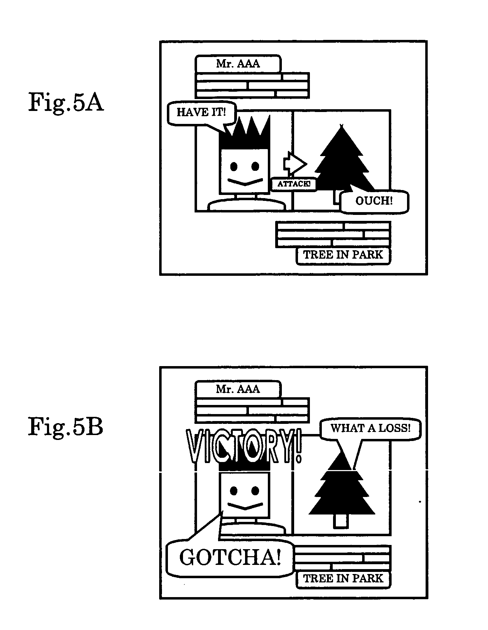

In this example, when the left fighting character (person) attacks the right fighting character (tree) as shown in FIG. 5A, the words of attack "Have it!" of the left fighting character recorded in advance is displayed on the screen of the display unit 130 with the timing of attack, and the "Ouch!" recorded in advance as the words of defense of the right fighting character is displayed.

Furthermore, in the present example, when the left fighting character (person) has won in the battle with the right fighting character (tree), thereby completing the video battle game as shown in FIG. 5B, the "Yahoo!" recorded in advance as the words of victory of the left fighting character is displayed on the screen of the display unit 130 with the timing of completing the game, and the "Lost!" recorded in advance as the words of loss of the right fighting character is displayed.

As shown in FIG. 3, when a battle between the fighting character of the mobile terminal 1_{A} and the fighting character of the mobile terminal 1_{B} is selected in step 309, the operator of the mobile terminal 1_{A} selects the battling method on the screen of the display unit 130 in step 312. In this example, it is assumed that three methods of "infrared communications", "wireless communications", and "mobile recording medium available" can be selected.

When the "infrared communications" is selected in step 312, then the operator of the mobile terminal 1_{A} selects one fighting character on the screen of the display unit 130, and specifies the battle of the fighting character in step 313. Then, the information about the fighting character (image, capability value, name, words in the video battle game, etc.) of the mobile terminal 1_{A} selected in step 313 is read from the storage unit 110 under the control of the control unit 140, and transmitted from the infrared communications unit 40 to the mobile terminal 1_{B}. On the other hand, similar information about the fighting character of another mobile terminal 1_{B} is received by the infrared communications unit 40 from the mobile terminal 1_{B}. Then, in step 314, according to the information about the fighting character of the mobile terminal 1_{A} read from the storage unit 110 and the information about the fighting character of another mobile terminal 1_{B} received by the infrared communications unit 40, the control unit 140 makes the fighting characters battle with each other on the screen of the display unit 130. The control unit 140 determines a winner depending on each capability value of the fighting character.

When the "wireless communications" is selected in step 312, the operator of the mobile terminal 1_{A} selects one fighting character on the screen of the display unit 130 in step 315 to specify the battle of the fighting character. Thus, the information (image, capability value, name, words in the video battle game, etc.) about the fighting character of the mobile terminal 1_{A} selected in step 315 is read from the storage unit 110 under the control of the control unit 140, and transmitted from the wireless communications unit 50 to the mobile terminal 1_{B} through the antenna 60. On the other hand, similar information about the fighting character of another mobile terminal 1_{B} is received by the wireless communications unit 50 through the antenna 60. Then, in step 316, according to the information about the fighting character of the mobile terminal 1_{A} read from the storage unit 110 and the information about the fighting character of another mobile terminal 1_{B} received by the wireless communications unit 50, the control unit 140 makes the fighting characters battle with each other on the screen of the display unit 130. The control unit 140 determines a winner depending on each capability value of the fighting character.

When the "mobile recording medium available" is selected in step 312, the operator of the mobile terminal 1_{A} selects one fighting character on the screen of the display unit 130 in step 317 to specify the battle of the fighting character. Thus, when the recording medium to be transferred to another mobile terminal 1_{B} is accommodated, the information (image, capability value, name, words in the video battle game, etc.) about the fighting character of the mobile terminal 1_{A} selected in step 317 is read from the storage unit 110 under the control of the control unit 140, and written to the recording medium accommodated by the storage medium accommodating unit 120. The recording medium is then transferred to the mobile terminal 1_{B}, and the mobile terminal 1_{B} reads the information written to the recording medium. On the other hand, when the recording medium to which similar information about the fighting character of another mobile terminal 1_{B} is written is accommodated by the storage medium accommodating unit 120, the information written to the recording medium is read under the control of the control unit 140. Then, in step 318, according to the information about the fighting character of the mobile terminal 1_{A} read from the storage unit 110 and the information about the fighting character of another mobile terminal 1_{B} read from the recording medium accommodated by the storage medium accommodating unit 120, the control unit 140 makes the fighting characters battle with each other on the screen of the display unit 130. The control unit 140 determines a winner depending on each capability value of the fighting character.

According to the present embodiment, since the video battle game is automatically performed according to each piece of information about a fighting character, it is not necessary for an operator of the mobile terminal 1_{A} to perform any operation during battle in a video game. Although not shown in FIGS. 5A and 5B, with a timing of one of the fighting characters attacking the other or winning the battle, an explosion or lightning can be effectively displayed. Additionally, the words of a fighting character can not only be displayed on the display unit 130, but also be output as voice from the speaker 70.

Furthermore, according to the present embodiment, the capability value setting unit 30 sets a capability value of a fighting character according to the attribute information about an image captured by the camera 10. However, the present invention is not limited to this embodiment. For example, the capability value setting unit 30 can be designed to set a capability value of a fighting character according to the attribute information about the voice collected by the microphone 80 when an image is captured by the camera 10. Otherwise, the capability value setting unit 30 can also be designed to set a capability value of a fighting character according to the attribute information about an image captured by the camera 10 and the attribute information about the voice collected by the microphone 80 when an image is captured. For example, the capability value setting unit 30 can change the capability value of a fighting character depending on the volume level of the voice collected by the microphone 80. Otherwise, the capability value setting unit 30 can change the capability value of a fighting character depending on the frequency when the voice collected by the microphone 80 is converted into a radio frequency signal by the voice processing unit 90.

According to the present embodiment, fighting characters are made to battle with each other inside the mobile terminals 1_{A} or 1_{B} or between the mobile terminals 1_{A} and 1_{B}. However, the present invention is not limited to this embodiment. For example, the information (image, capability value, name, words in video battle game, etc.) about a fighting character set in the mobile terminals 1_{A} and 1_{B} can be transmitted to another information terminal such as a note-type personal computer, and the fighting character set by the mobile terminals 1_{A} and 1_{B} can be made to battle inside another information terminal or between the other information terminal and a further information terminal.

While preferred embodiments of the present invention have been described using specific terms, such description is for illustrative purposes only, and it is to be understood that changes and variations may be made without departing from the spirit of scope of the following claims.

## Claims

1. A method of battle in a video game performed using an information terminal, comprising:
a step of setting an image captured by a camera as a fighting character; and
a step of making the set fighting character battle with another fighting character on a screen of the information terminal.

2. The method of battle in a video game according to claim 1, further comprising
a step of setting a capability value of the fighting character, wherein
in the step of making the fighting characters battle with each other, a winner is determined based on each capability value of the fighting character.

3. The method of battle in a video game according to claim 2, wherein
in the step of setting the capability value of the fighting character, the capability value of the fighting character is set according to attribute information about an image captured by the camera.

4. The method of battle in a video game according to claim 3, wherein
in the step of setting the capability value of the fighting character, the capability value of the fighting character is set according to attribute information about an image captured by the camera, and attribute information about voice collected when an image is captured by the camera.

5. The method of battle in a video game according to claim 2, wherein
in the step of setting the capability value of the fighting character, the capability value of the fighting character is set according to attribute information about voice collected when an image is captured by the camera.

6. The method of battle in a video game according to claim 3, wherein
in the step of setting the capability value of the fighting character, a capacity of the image is used as attribute information about the image.

7. The method of battle in a video game according to claim 3, wherein
in the step of setting the capability value of the fighting character, a value of an arbitrary digit of a capacity of the image is used as attribute information about the image.

8. The method of battle in a video game according to claim 3, wherein
in the step of setting the capability value of the fighting character,
RGB data obtained by RGB-analyzing the image is used as attribute information about the image.

9. The method of battle in a video game according to claim 3, wherein
in the step of setting the capability value of the fighting character,
vector data obtained by vector-analyzing the image is used as attribute information about the image.

10. The method of battle in a video game according to claim 2, wherein
in the step of making the fighting characters battle with each other, fighting characters in an information terminal are made to battle with each other.

11. The method of battle in a video game according to claim 2, wherein
in the step of making the fighting characters battle with each other, a fighting character in an information terminal is made to battle with a fighting character in another information terminal.

12. The method of battle in a video game according to claim 11, wherein
in the step of making the fighting characters battle with each other, information about a fighting character of an information terminal is obtained by another information terminal, and information about a fighting character of another information terminal is obtained.

13. The method of battle in a video game according to claim 12, wherein
in the step of making the fighting characters battle with each other, information about a fighting character of an information terminal is transmitted to another information terminal in infrared communications, and information about a fighting character of another information terminal is received in the infrared communications.

14. The method of battle in a video game according to claim 12, wherein
in the step of making the fighting characters battle with each other, information about a fighting character of an information terminal is transmitted to another information terminal in wireless communications, and information about a fighting character of another information terminal is received in the wireless communications.

15. The method of battle in a video game according to claim 12, wherein
in the step of making the fighting characters battle with each other, information about a fighting character of an information terminal is written to a recording medium to be transferred to another information terminal, and when a recording medium to which information about a fighting character of the other information terminal is written is transferred to the information terminal, information about a fighting character of another information terminal is read from the recording medium.

16. The method of battle in a video game according to claim 12, wherein
in the step of making the fighting characters battle with each other, an image captured by an information terminal and information about a capability value set by the information terminal are included as information about a fighting character of the information terminal.

17. The method of battle in a video game according to claim 16, further comprising
a step of setting a name of a fighting character of an information terminal and words in a video battle game, wherein
in the step of making the fighting characters battle with each other, a name set by an information terminal and information about words in a video battle game are included as information about a fighting character of the information terminal.

18. The method of battle in a video game according to claim 16, wherein
in the step of making the fighting characters battle with each other, when a winner is determined, a capability value set by an information terminal is used as a capability value of a fighting character of the information terminal, and a capability value set by another information terminal and obtained from the other information terminal is used as a capability value of a fighting character of the other information terminal.

19. An information terminal which performs a video battle game, comprising:
means for fetching an image captured by a camera; and
control means for setting the image captured by the camera as a fighting character, and making the set fighting character battle with another fighting character on a screen.

20. The information terminal according to claim 19, further comprising
capability value setting means for setting a capability value of the fighting character, wherein
said control means determines a winner based on each capability value of the fighting character when the fighting characters battle with each other.

21. The information terminal according to claim 20, wherein
said capability value setting means sets a capability value of the fighting character according to attribute information about an image captured by the camera.

22. The information terminal according to claim 21, further comprising
voice collection means for collecting voice when an image is captured by the camera, wherein
said capability value setting means sets a capability value of the fighting character according to attribute information about an image captured by the camera, and attribute information about voice collected by said voice collection means when the image is captured by the camera.

23. The information terminal according to claim 20, further comprising
voice collection means for collecting voice when an image is captured by the camera, wherein
said capability value setting means sets a capability value of the fighting character according to attribute information about voice collected by said voice collection means when the image is captured by the camera.

24. The information terminal according to claim 21, wherein
said capability value setting means uses a capacity of the image as the attribute information about the image.

25. The information terminal according to claim 21, wherein
said capability value setting means uses a value of an arbitrary digit of a capacity of the image as attribute information about the image.

26. The information terminal according to claim 21, wherein
said capability value setting means uses RGB data obtained by RGB-analyzing the image as attribute information about the image.

27. The information terminal according to claim 21, wherein
said capability value setting means uses vector data obtained by vector-analyzing the image as attribute information about the image.

28. The information terminal according to claim 20, wherein
said control means makes fighting characters of the information terminal battle with each other.

29. The information terminal according to claim 20, wherein
said control means makes a fighting character of the information terminal battle with a fighting character of another information terminal.

30. The information terminal according to claim 29, wherein
when said control means makes a fighting character of the information terminal battle with a fighting character of another information terminal, said control means makes the other information terminal to obtain information about the fighting character of the information terminal, and obtains information about the fighting character of the other information terminal.

31. The information terminal according to claim 30, further comprising
infrared communications means for performing infrared communications, wherein
when said control means makes a fighting character of the information terminal battle with a fighting character of another information terminal, said control means transmits information about the fighting character of the information terminal to the other information terminal through said infrared communications means, and makes said infrared communications means receive information about the fighting character of the other information terminal.

32. The information terminal according to claim 30, further comprising
wireless communications means for performing wireless communications, wherein
when said control means makes a fighting character of the information terminal battle with a fighting character of another information terminal, said control means transmits information about the fighting character of the information terminal to the other information terminal through said wireless communications means, and makes said wireless communications means receive information about the fighting character of the other information terminal.

33. The information terminal according to claim 30, further comprising
recording medium accommodation means for accommodating a mobile recording medium, wherein
when said control means makes a fighting character of the information terminal battle with a fighting character of another information terminal, and when the recording medium to be transferred to the other information terminal is accommodated by said recording medium accommodation means, said control means writes information about the fighting character about the information terminal to the recording medium, and reads information about the fighting character of the other information terminal from the recording medium when the recording medium to which the information about the fighting character of the other information terminal is written is accommodated by said recording medium accommodation means.

34. The information terminal according to claim 30, wherein
said control means includes information about an image captured by an information terminal of said control means and a capability value set by the information terminal of said control means as information about the fighting character of the information terminal of said control means.

35. The information terminal according to claim 34, further comprising
operation means for setting a name of the fighting character and words for use in a video battle game, wherein
said control means includes a name and information about words for use in a video battle game set by the information terminal of the control means as information about a fighting character of the information terminal of said control means.

36. The information terminal according to claim 34, wherein
when a winner is determined, said control means uses a capability value set by an information terminal as a capability value of a fighting character of the information terminal, and uses a capability value set by another information terminal and obtained from the other information terminal as a capability value of a fighting character of the other information terminal.
